**Europäisches Patentamt**

**European Patent Office**

**Office européen des brevets**

(19)

(11) Veröffentlichungsnummer : **0 166 185**
**B1**

(12) **EUROPÄISCHE PATENTSCHRIFT**

(45) Veröffentlichungstag der Patentschrift :
27.07.88

(51) Int. Cl.⁴ : **C 01 G 3/02**

(21) Anmeldenummer : **85106144.0**

(22) Anmeldetag : **18.05.85**

(54) Verfahren zur Herstellung von Kupfer-II-hydroxid.

(30) Priorität : 23.05.84 DE 3419089

(43) Veröffentlichungstag der Anmeldung :
02.01.86 Patentblatt 86/01

(45) Bekanntmachung des Hinweises auf die Patenterteilung : 27.07.88 Patentblatt 88/30

(84) Benannte Vertragsstaaten :
AT BE CH DE FR GB IT LI LU

(56) Entgegenhaltungen :
EP-A- 0 080 227
DE-C- 662 223
FR-A- 940 030
GB-A- 442 664

(73) Patentinhaber : NORDDEUTSCHE AFFINERIE AG
Alsterterrasse 2
D-2000 Hamburg 36 (DE)

(72) Erfinder : Ploss, Hartmut, Dr.
Sierichstrasse 88
D-2000 Hamburg 60 (DE)
Erfinder : Lehne, Jürgen
Süderstrasse 347 a
D-2000 Hamburg 26 (DE)

(74) Vertreter : Rieger, Harald, Dr.
Reuterweg 14
D-6000 Frankfurt am Main (DE)

EP 0 166 185 B1

## Beschreibung

Die Erfindung betrifft ein Verfahren zur Herstellung von stabilisiertem Kupfer-II-hydroxid aus Kupferoxichlorid durch Umsetzung mit basischen Stoffen.

Bei dem aus DE-OS 31 45 995 bekannten Verfahren zur Herstellung von Kupfer-II-hydroxid aus Kupferoxichlorid setzt man zum Erhalt stabiler, lagerfähiger Produkte vor der Umsetzung des in wäßriger Phase suspendierten Kupferoxichlorids mit Alkali- und/oder Erdalkalihydroxid Phosphationen zu, wäscht die bei der Umsetzung erhaltene Kupfer-II-hydroxid-Ausfällung und stabilisiert das erneut suspendierte Kupfer-II-hydroxid mit saurem Phosphat unter Einstellung eines pH-Wertes von 7,5 bis 9. Dieses Verfahren benötigt mehrere Verfahrensschritte, die notwendigerweise größeren Arbeits- und Apparateaufwand erfordern. Es ist daher auch bekannt, Kupfer-II-hydroxid ohne nachträgliche Einstellung des pH-Werts herzustellen (Chem. Abstr. Vol. 99, 1983, S. 128, 160 785 g). Dieses Verfahren hat aber den entscheidenden Nachteil, daß sich das hergestellte Kupfer-II-hydroxid bei längerem Stehen bzw. sofort beim Trocknen mindestens teilweise in schwarzes Kupfer-II-oxid umwandelt.

Aufgabe der Erfindung ist es, ein Verfahren zur Herstellung von Kupfer-II-hydroxid aus Kupferoxichlorid bereitzustellen, das wenig arbeits- und geräteaufwendig und somit einfach in der Durchführung ist und zu einem stabilen, lagerfähigen Kupfer-II-hydroxid führt.

Zur Lösung dieser Aufgabe geht die Erfindung aus von einem Verfahren zur Herstellung von Kupfer-II-hydroxid durch Umsetzen von Kupferoxichlorid in wäßriger Suspension mit Alkali- oder Erdalkalihydroxid in Gegenwart von Stabilisierungsmitteln, Abtrennen und Auswaschen des Produkts. Gemäß der Erfindung wird ein Verfahren der genannten Art in der Weise ausgestaltet, daß als Stabilisierungsmittel anorganische Siliciumverbindungen in einer Menge von 1 bis 10 Gew.-%, auf festes Kupfer-II-hydroxid bezogen, zugesetzt werden, die Hydroxylgruppen (SiOH, Silanolgruppen) im Molekül enthalten oder diese im wäßrigen Medium bilden.

Durch den erfindungsgemäßen Zusatz dieser Stoffe wird in einfacher Weise eine Stabilisierung des ausgefällten Kupferhydroxids bewirkt und eine auch nur teilweise Umwandlung des Kupferhydroxids in schwarzes Kupfer-II-oxid sowohl bei langer Lagerung als Suspension als auch bei Gewinnung des trockenen Präparats Kupfer-II-hydroxid vermieden.

Gemäß der Erfindung sind feinteilige feste oder in wäßrigem Medium gelöste bzw. kolloidal gelöste Kieselsäuren geeignete Stabilisierungsmittel. Soweit es sich um wasserunlösliche Zusatzstoffe handelt, werden diese der wäßrigen Suspension eines frisch hergestellten Kupferoxichlorids unmittelbar zugesetzt. Das heißt, die Stabilisierungsmittel werden in die im Reaktionsbehälter befindliche Kupferoxichlorid-Suspension vor der Umsetzung mit Alkali- oder Erdalkalihydroxid eingebracht.

Im Falle der Zugabe wasserlöslicher oder kolloidal gelöster Stabilisierungsmittel ist es zweckmäßig, die Stoffe unmittelbar nach dem Wasch- und Filtrationsprozeß einer separat anzusetzenden Suspension des Kupfer-II-hydroxids hinzuzufügen.

Als wasserunlösliche anorganische Siliciumverbindungen, die Hydroxylgruppen im Molekül enthalten oder solche in wäßrigem Milieu bilden, eignen sich pyrogene Kieselsäuren, beispielsweise durch thermische Zersetzung von Siliciumtetrachlorid in der Knallgasflamme erzeugte Kieselsäuren. Derartige pyrogene Kieselsäuren haben im allgemeinen einen Teilchendurchmesser von 10 bis 20 nm und verbessern auch gleichzeitig die physikalischen Eigenschaften des Endproduktes, beispielsweise die Schwebefähigkeit oder Benetzbarkeit des Kupferhydroxids. In ähnlicher Weise kann auch feinteiliges Siliciumdioxid verwendet werden. Eine Korngröße von 10 bis 80 nm eines entsprechend aufbereiteten Siliciumdioxids wird auch hier bevorzugt.

Die festen Kieselsäuren lagern in wäßrigem Milieu über Wasserstoffbrückenbildung leicht Wassermoleküle an, so daß es zur Ausbildung eines hohen Anteils von SiOH-Gruppen kommt. Zur Herstellung eines stabilisierten Kupferhydroxids eignen sich nach dem erfindungsgemäßen Verfahren ferner die wasserlöslichen bzw. die kolloidal gelösten Kieselsäuren, wie Orthokieselsäure, Metakieselsäure oder Polykieselsäuren. Beispielsweise eignen sich Kieselsole oder Kieselgele, die aus Wasserglaslösungen durch Zusatz verdünnter Säuren hergestellt worden sind. Nach einer bevorzugten Ausgestaltung der Erfindung kann aber auch Alkalisilikat in Lösung eingesetzt werden, beispielsweise eine Wasserglaslösung.

In dem erfindungsgemäßen Verfahren werden die anorganischen Siliciumverbindungen zweckmäßig in einer Menge von 1 bis 10 %, bezogen auf festes Kupfer-II-hydroxid, eingesetzt. Nach einer bevorzugten Ausgestaltung der Erfindung wird für die Herstellung eines stabilisierten Kupfer-II-hydroxids das Stabilisierungsmittel in einer Menge von 2 bis 5 %, jeweils auf festes Kupfer-II-hydroxid bezogen, eingesetzt.

Eine weitere vorteilhafte Ausgestaltung der Erfindung besteht darin, daß die Auswahl der stabilisierend wirkenden Substanz so getroffen wird, daß gleichzeitig wichtige physikalische Eigenschaften des Endproduktes, z. B. Schwebefähigkeit, Benetzung, wie sie für die verschiedensten Anwendungen, speziell als Pflanzenschutzmittel, benötigt werden, verbessert werden. In dieser Hinsicht eignen sich insbesondere pyrogen hergestellte Kieselsäuren.

In dem erfindungsgemäßen Verfahren ist weiterhin darauf zu achten bzw. sicherzustellen, daß die Suspension des hergestellten stabilisierten Kupfer-II-hydroxids einen pH-Wert im Bereich von 7,5 bis 9 aufweist. Dies wird durch Waschprozesse oder Zugabe von Phosphorsäure in einfacher Weise erreicht.

Das erfindungsgemäße Verfahren weist Vorteile auf.

Das in dem erfindungsgemäßen Verfahren anfallende Waschwasser enthält praktisch keine Stoffe, die zu einer Abwasserbelastung führen. Die Mutterlauge und ein Teil des anfallenden Waschwassers kann im Kreislauf erneut zur Suspendierung des Ausgangsproduktes Kupferoxichlorid verwendet werden. In diesem Fall muß aber die Laugenkonzentration von ursprünglich 2 bis 5 g/l auf 4 bis 10 g/l erhöht werden.

Das nach dem erfindungsgemäßen Verfahren erhaltene stabilisierte Kupfer-II-hydroxid enthält 45 bis 61 Gew.-% Kupfer, besitzt eine Teilchengröße von 0,1 bis 5 μm und verändert sich in seiner physikalischen und chemischen Zusammensetzung selbst innerhalb mehrerer Jahre nicht.

Das nach dem erfindungsgemäßen Verfahren erzeugte Kupfer-II-hydroxid ist insbesondere zur Herstellung anderer Kupferverbindungen, für die Weiterverarbeitung zu Kupferfarben und zur Formulierung von Pflanzenschutzpräparaten geeignet.

Die Erfindung wird anhand der nachfolgenden Beispiele beispielsweise und näher erläutert.

Beispiel 1

116 Liter einer frisch hergestellten Kupferoxichlorid-Suspension mit einem Feststoffgehalt von 860 g/l wurden mit 3 kg feindisperser pyrogener Kieselsäure in 600 Liter Wasser unter Rühren vermischt. Anschließend wurden unter Einhaltung einer Reaktionstemperatur von max. 25° C 36 kg Ätznatron, das zuvor in 150 Liter Wasser gelöst worden war, schnell zugemischt. Nach wenigen Minuten war die Reaktion abgeschlossen, was an der intensiven Blaufärbung des entstandenen Kupfer-II-hydroxids zu erkennen ist.

Anschließend erfolgte eine Auswaschung des erhaltenen Kupfer-II-hydroxids auf einem Drehfilter mit Wasser, wobei der pH-Wert auf 7,5 bis 9 gesenkt wurde.

Das erhaltene Produkt konnte als Suspension oder zu Pulver getrocknet weiterverarbeitet werden. Eine Kupfer-II-oxid-Bildung und damit eine Schwarzfärbung trat weder bei der Lagerung des flüssigen Produktes noch bei der Trocknung des Produktes auf.

Beispiel 2

Das Verfahren des Beispiels 1 wurde wiederholt, jedoch wurde anstelle von Wasser als Suspensionsmedium für das Ausgangsprodukt Kupferoxichlorid die mit Natronlauge angereicherte Mutterlauge und ein Teil des Waschwassers verwendet. Das in diesem Wasser vorhandene Natriumchlorid hatte nur insofern einen Einfluß, als die Laugenkonzentration gegenüber Beispiel 1 von 4 g/l auf 7 g/l erhöht werden mußte.

## Patentansprüche

1. Verfahren zur Herstellung von Kupfer-II-hydroxid durch Umsetzen von Kupferoxichlorid in wäßriger Suspension mit Alkali- oder Erdalkalihydroxid in Gegenwart von Stabilisierungsmitteln, Abtrennen und Auswaschen des Reaktionsproduktes, dadurch gekennzeichnet, daß als Stabilisierungsmittel anorganische Siliciumverbindungen, die Hydroxylgruppe (SiOH) im Molekül enthalten oder in wäßrigem Medium bilden, in einer Menge von 1 bis 10 Gew.-%, auf festes Kupfer-II-hydroxid bezogen, unter Einhaltung einer Reaktionstemperatur von max. 25° C zugesetzt werden, wobei im Falle der Zugabe wasserlöslicher oder kolloidal gelöster Stabilisierungsmittel diese nach dem Abtrennen und Auswaschen einer separat anzusetzenden Suspension des Kupfer-II-hydroxids zugefügt werden und wobei im Falle der Zugabe wasserunlöslicher Stabilisierungsmittel diese der wäßrigen Suspension eines frisch hergestellten Kupferoxichlorids unmittelbar zugesetzt werden vor der Umsetzung mit Alkali- oder Erdalkalihydroxid.

2. Verfahren nach Anspruch 1, dadurch gekennzeichnet, daß feinteilige feste oder wasserlösliche bzw. kolloidal gelöste Kieselsäuren eingesetzt werden.

3. Verfahren nach den Ansprüchen 1 bis 2, dadurch gekennzeichnet, daß Orthokieselsäure, Metakieselsäure oder Polykieselsäuren eingesetzt werden.

4. Verfahren nach den Ansprüchen 1 bis 2, dadurch gekennzeichnet, daß feinteilige, durch pyrogene Zersetzung von Siliciumtetrachlorid hergestellte Kieselsäure eingesetzt wird.

5. Verfahren nach den Ansprüchen 1 bis 2, dadurch gekennzeichnet, daß feinteiliges Siliciumdioxid einer Korngröße von 10 bis 80 nm eingesetzt werden.

6. Verfahren nach den Ansprüchen 1 bis 2, dadurch gekennzeichnet, daß Alkalisilikate eingesetzt werden.

7. Verfahren nach einem oder mehreren der Ansprüche 1 bis 6, dadurch gekennzeichnet, daß die anorganischen Siliciumverbindungen in einer Menge von 2 bis 5 Gew.-%, auf festes Kupfer-II-hydroxid bezogen, zugesetzt werden.

## Claims

1. Process for producing copper (II) hydroxide by reacting copper oxychloride in an aqueous suspension with alkali or alkaline earth metal hydroxide in the presence of stabilisers, separating and washing out the reaction product, characterised in that inorganic silicon compounds are used as stabilisers which contain a hydroxyl group (SiOH) in the molecule or form such a group in an aqueous medium, are added in a quantity of 1 to 10 wt. %, relative to the solid copper (II) hydroxide, maintaining a reaction temperature of 25° C maximum, whereby if, water-soluble or colloidally dissolved stabilisers are added, these are added to a separately prepared suspension of the copper (II) hydroxide after separation and washing out, and whereby if non-water-soluble stabilisers are added, these are added directly to the aqueous suspension of a freshly prepared copper oxychloride before being reacted with alkali or alkaline earth metal hydroxide.

2. Process according to Claim 1, characterised in that fine-particle solid or water-soluble or colloidally dissolved silicic acids are used.

3. Process according to Claims 1 or 2, characterised in that orthosilicic acid, metasilicic acid or polysilicic acids are used.

4. Process according to Claims 1 or 2, characterised in that fine-particle silicic acid produced by pyrogenic decomposition of silicon tetrachloride is used.

5. Process according to Claims 1 or 2, characterised in that fine-particle silicon dioxide with a grain size of 10 to 80 nm is used.

6. Process according to Claims 1 or 2, characterised in that alkali silicates are used.

7. Process according to one or more of Claims 1 to 6, characterised in that the inorganic silicon compounds are added in a quantity of 2 to 5 wt. % relative to solid copper (II) hydroxide.

**Revendications**

1. Procédé de préparation d'hydroxyde cuivrique, par réaction d'oxychlorure de cuivre en suspension aqueuse sur un hydroxyde de métal alcalin ou de métal alcalino-terreux, en présence d'agents de stabilisation, par séparation et par entraînement du produit de réaction par lavage, caractérisé en ce qu'il consiste à ajouter comme agents de stabilisation des composés minéraux du silicium qui contiennent le groupe hydroxyle (SiOH) dans la molécule, ou qui le forment en milieu aqueux en une quantité de 1 à 10 % en poids rapportée à l'hydroxyde cuivrique solide, tout en maintenant une température de réaction de 25 °C au maximum, les agents de stabilisation étant ajoutés, dans le cas où ils sont solubles dans l'eau ou dissous sous forme colloïdale, après la séparation et l'entraînement par lavage, à une suspension préparée séparément de l'hydroxyde cuivrique et étant ajoutés directement, dans le cas où ils sont insolubles dans l'eau, à la suspension aqueuse d'un oxychlorure de cuivre fraîchement préparé, avant la réaction sur l'hydroxyde de métal alcalin ou de métal alcalino-terreux.

2. Procédé suivant la revendication 1, caractérisé en ce qu'il consiste à utiliser des acides siliciques solides à l'état finement divisé, ou solubles dans l'eau, ou dissous à l'état colloïdal.

3. Procédé suivant la revendication 1 ou 2, caractérisé en ce qu'il consiste à utiliser de l'acide orthosilicique, de l'acide métasilicique ou des acides polysiliciques.

4. Procédé suivant la revendication 1 ou 2, caractérisé en ce qu'il consiste à utiliser de l'acide silicique à l'état finement divisé, préparé par décomposition par pyrogénation de tétrachlorure de silicium.

5. Procédé suivant la revendication 1 ou 2, caractérisé en ce qu'il consiste à utiliser du dioxyde de silicium à l'état finement divisé, ayant une granulométrie de 10 à 80 nm.

6. Procédé suivant la revendication 1 ou 2, caractérisé en ce qu'il consiste à utiliser des silicates de métal alcalin.

7. Procédé suivant l'une ou plusieurs des revendications 1 à 6, caractérisé en ce qu'il consiste à ajouter les composés minéraux du silicium en une quantité représentant de 2 à 5 % du poids de l'hydroxyde cuivrique solide.